# EUROPEAN PATENT APPLICATION

(11) **EP 4 344 865 A1**
(43) Date of publication of application: **03.04.2024**
(21) Application number: 22198405.7
(22) Date of filing: 28.09.2022
(51) Int. Cl.: B29D 30/56, B29C 35/02, B29D 30/54

(54) **TIRE MANUFACTURING METHOD AND PLANT**

(71) Applicant: Bridgestone Europe NV/SA, 1930 Zaventem (BE)
(72) Inventor: VIncent, Bram Jozef, 1932 Zaventem (BE)
(74) Representative: Marchetti, Alessio

(57) **Abstract**

A tire manufacturing method and plant (1), in which: a naked casing (5) presenting surface (4) without any tread is provided; a winding system (7) winds a green rubber cushion (8) and a pre-cured tread strip (9) about the surface (4); and a curing system (10) cures said product. The cushion (8) is at least partially electrically conductive and, during the curing process, the cushion is heated by circulating an electric current through the cushion. In the curing system the tire (2) is inserted inside a sealed curing chamber (11) which is pressurized over the ambient pressure and is inflated. The curing chamber (11) is delimited by two opposite base walls (12) having a circular shape and by a lateral wall (13) having a cylindrical shape and connecting the two base walls one to the other. The lateral wall is moved axially to and from the two base walls (12) respectively to close and to open the curing chamber.

## Description

### TECHNICAL SECTOR

The present invention relates to a tire manufacturing method and plant.

The present invention finds advantageous application in the field of *"truck"* tire retreading, to which the discussion that follows will make explicit reference without loss of generality.

### PRIOR ART

Traditionally, after first use *"truck"* tires are retreaded, i.e., they are provided with a new tread in place of the old worn tread which is removed beforehand. The retreading of a *"truck"* tire provides to eliminate the old worn tread mechanically from the used tire to expose the casing, and subsequently applying a new tread to the casing. The application of a new tread to the casing provides winding about the casing a tread strip; the casing is then subjected to a curing process to determine the optimum adhesion of the tread to the casing. In the hot retreading process, the tread strip is green and without a pattern which is implemented during the curing step in a curing press provided with a mold having the required pattern. In the hot retreading process, the curing takes place at high temperatures (around 150°C to 160°C) and high pressures (in the order of about 1.4-1.6 MPa, i.e. 14-16 bar) which are needed to make the rubber fluid enough to flow into the mold in order to form the pattern during curing; the thermal and mechanical stresses to which the casing is subjected due to such high temperatures and pressures can however cause damage to the casing.

In the cold retreading process, the tread strip (called "*PCT* - *Pre Cured Tread* - *strip*") is pre-cured and already provided with the pattern, and between the casing and the pre-cured tread strip an intermediate strip or cushion, having a bonding function, is interposed. In the cold retreading process, the curing is only meant to cure the cushion in order to determine the optimal adhesion of the tread strip to the casing by means of the bonding action of the cushion (i.e., a pattern is not printed during curing); as a result, in the cold retreading process, curing takes place at lower temperatures (in the order of 100°C - 125°C) and at lower pressures (in the order of 0.4-0.6 MPa, i.e. 4-6 bar), the casing is therefore subjected to lower thermal and mechanical stresses.

Generally, the hot retreading process provides for an average curing period for each *"truck"* tire of about 1 hour, while the cold retreading process provides for an average curing period for each *"truck"* tire of about 4 hours.

In the cold retreading process and to ensure adequate adhesion of the tread strip to the casing (with the interposition of the cushion constituted by a green rubber strip), it is necessary during curing to apply a radial thrust that compresses the tread strip against the casing. In known manufacturing plants, such a radial thrust is obtained by inserting the tire in an autoclave within which an overpressure (in the order of 0.6 MPa, i.e. 6 bar), in relation to atmospheric pressure, is implemented and by inserting the tire into a flexible envelope within which a vacuum is initially created and which is subsequently inflated with air to a pressure of about 0.45 MPa (i.e. 4.5 bar); the difference in pressure, which is maintained during the curing cycle, results in the generation of a pneumatic thrust that compresses the tread strip against the casing.

The use of the autoclave and the envelope makes it possible to apply a uniform thrust to the entire tread strip both at the peaks and at the valleys of the pattern and thus makes it possible to ensure optimal tread adhesion to the casing.

The patent applications WO2020188502A1 and WO2020188503A1 disclose a method for the cold retreading of a tire, wherein the cushion is manufactured with a compound comprising a conductive material and the curing process comprises connecting the cushion to a heat or power source; in this manner, during the curing process only the cushion (and not the entire tire) is heated to the curing temperature and thus it is possible to save energy and to reduce the thermal stress on the entire tire.

### DESCRIPTION OF THE INVENTION

The object of the present invention is to provide a tire manufacturing method and a tire manufacturing plant, which are of easy and economical implementation and, at the same time, allow to apply a very uniform heating of the cushion and a very uniform thrust to the entire tread strip.

According to the present invention, a tire manufacturing method and a tire manufacturing plant are provided as recited in the attached claims.

### BRIEF DESCRIPTION OF THE DRAWINGS

The present invention will now be described with reference to the appended drawings, showing a non-limiting exemplary embodiment, wherein:
- Figure 1 is a schematic view of a tire cold manufacturing plant according to the present invention and provided with a curing system;
- Figure 2 is a perspective view of the curing system;
- Figure 3 is a perspective view with parts removed for clarity of the curing system;
- Figure 4 is a schematic view of a curing chamber of the curing system;

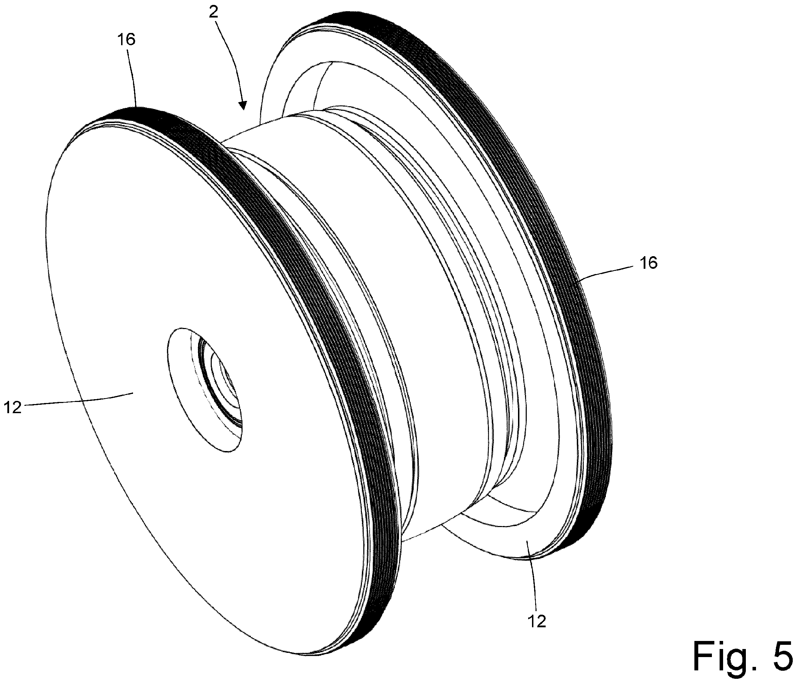

- Figures 5 and 6 are perspective views with parts removed for clarity of components of the curing chamber;
- Figures 7, 8 and 9 are different exploded views with parts removed for clarity of the component of Figures 5 and 6;
- Figure 10 is an enlarged view of a detail of Figure 9; and
- Figures 11 and 12 are a perspective and a schematic view of an electric contact of the curing system.

### PREFERRED EMBODIMENTS OF THE INVENTION

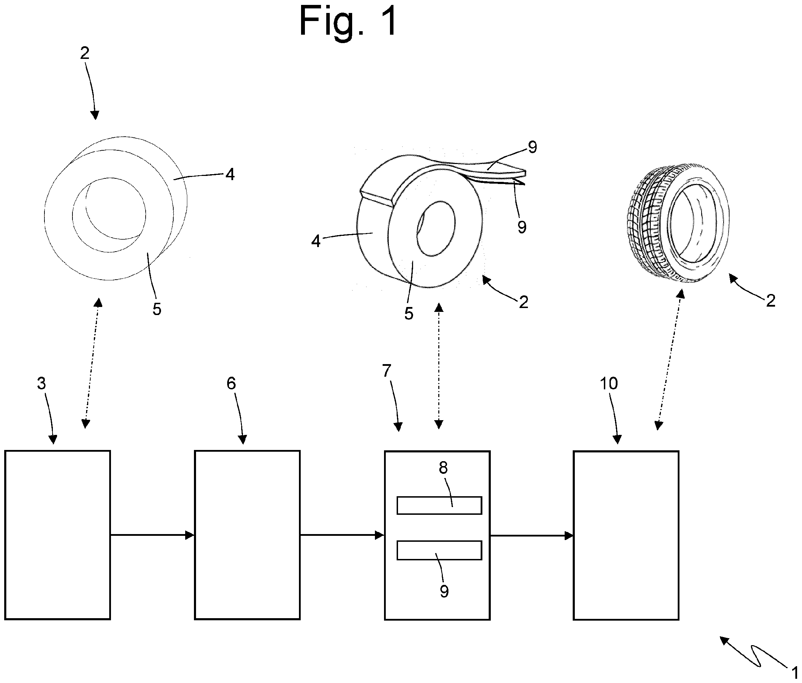

In figure 1, with the number 1, is indicated a manufacturing plant for producing a tire 2; in particular, the manufacturing plant is configured to retread a used tire 2 (but could also be configured to produce a new tire).

The manufacturing plant 1 comprises a removal system 3, wherein the old worn tread (not shown) is mechanically removed from the tire 2, exposing an equatorial surface 4 of a casing 5 of the tire 2. In other words, the removal system 3 produce a naked casing 5 presenting the equatorial surface 4 without any tread.

Furthermore, the manufacturing plant 1 comprises a skiving system 6, wherein the equatorial surface 4 of the casing 5 is subjected to skiving to remove any local damage; the skiving operation results in the formation on the equatorial surface 4 of the casing 5 of craters of random and variable dimensions and positions which are subsequently filled with green rubber.

The manufacturing plant 1 comprises a winding system 7 whereto the casing 5 is transferred at the end of the filling; within the winding system 7, an intermediate strip or cushion 8 of green rubber and a pre-cured tread strip (PCT) 9 are wound about the casing 5 (one after the other). It is important to observe that the pre-cured tread strip 9 has already been cured in a special mold before being wound about the casing 5 and it is provided with a tread pattern.

The manufacturing plant 1 comprises a curing system 10, in which the retreaded tire 2 (i.e., provided with the pre-cured tread strip 9) is subjected to a curing process for curing the cushion 8 which is interposed between the casing 5 and the pre-cured tread strip 9 thus resulting in optimal adhesion of the pre-cured tread strip 9 to the casing 5 by means of the bonding action of the cushion 8. It is important to note that during the curing process only the curing of the tread strip 8 is performed, without printing any kind of pattern on the pre-cured tread strip 9, which is already provided with a tread pattern.

The cushion 8 is at least partially electrically conductive and, during the curing process in the curing system 10, the cushion 8 is heated by an electric current through the cushion 8.

According to a possible embodiment, the cushion 8 is made as disclosed in patent application WO2020188503A1 and thus is manufactured with a compound comprising 1 to 30 phr of at least one conductive material chosen among graphite, graphene and a carbon black having a surface area which is greater than or equal to 300 m²/gr.

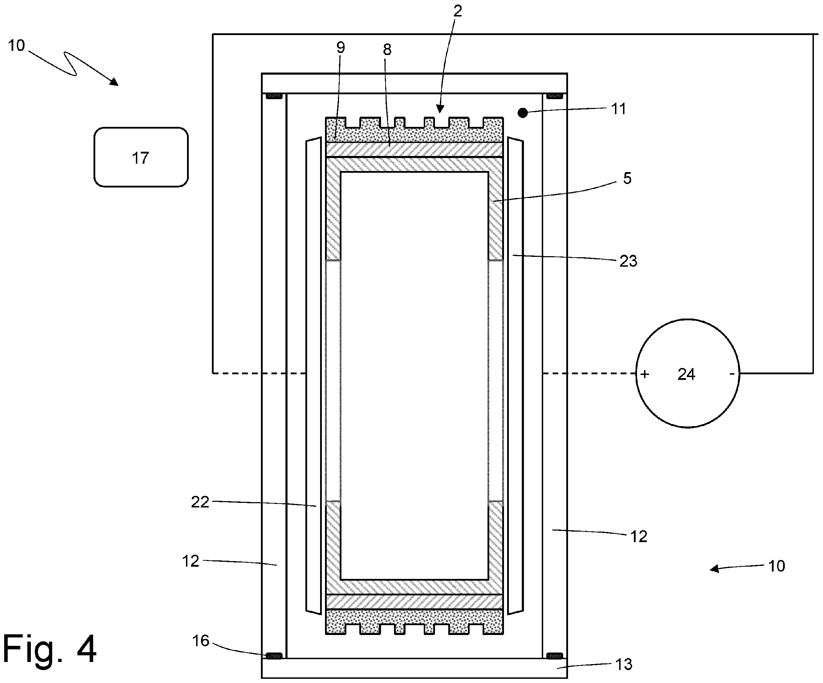

As shown in Figure 4, the curing system 10 comprises a sealed curing chamber 11 in which the tire 2 is inserted during the curing process and which is pressurized over the ambient pressure (the overpressure is in the order of 0.6 MPa, i.e. 6 bar) to apply, in know manner, on the pre-cured strip 9 a thrust pushing the pre-cured strip 9 against the casing 5 (with the interposition of the cushion 8); in particular, as known, when the tire 2 is in the curing chamber 11, also the tire 2 is inflated in an equal overpressure as the curing chamber 11.

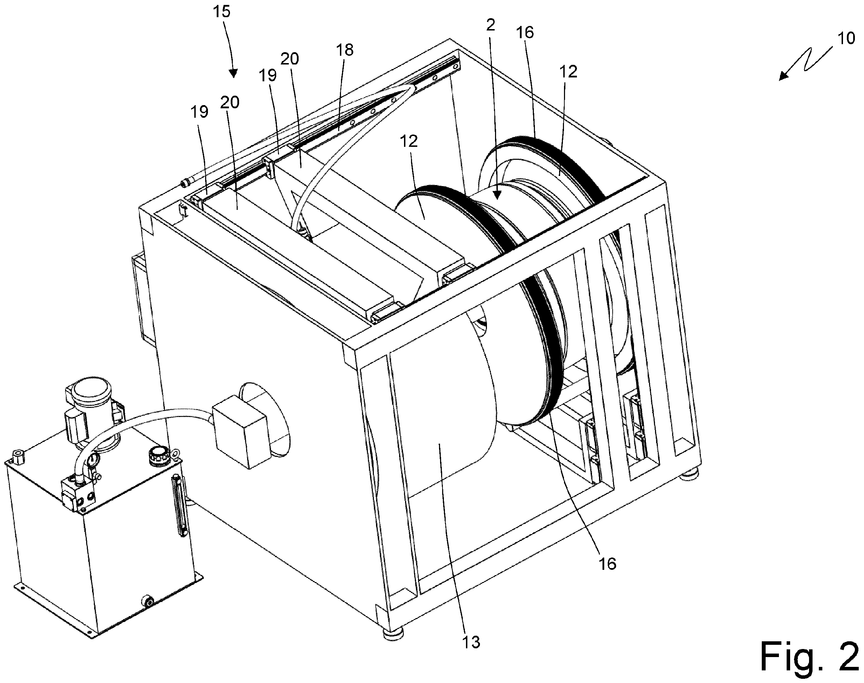

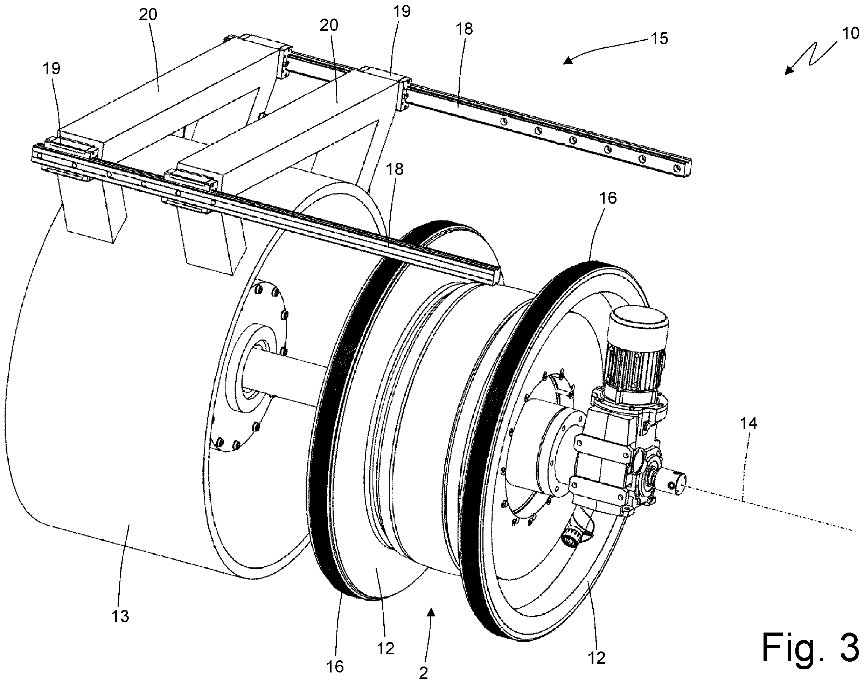

The curing chamber 11 is delimited by two opposite base walls 12 having a circular shape and by a lateral wall 13 having a cylindrical shape and connecting the two base walls 12 one to the other. The lateral wall 13 is moved axially (i.e. along a central axis 14 of symmetry shown in Figure 2), by means of a displacing device 15 (shown in Figures 2 and 3), to and from the two base walls 12 respectively to close (as shown in Figure 4) and to open (as shown in Figures 2 and 3) the curing chamber 11. In other words, the displacing device 15 moves axially the lateral wall 13 between an open position (shown in Figures 2 and 3), in which the lateral wall 13 is far from the base walls 12 and thus the curing chamber 11 is radially open to unload a cured tire 2 and to load of a new tire 2 to be cured, and a closed position (shown in Figure 4), in which the lateral wall 13 is coupled to the base walls 12 to close (seal) the curing chamber 11 to carry out the curing process.

According to a preferred embodiment, only the lateral wall 13 is axially movable to open and close the curing chamber 11 while the two base walls 12 are not axially movable to open and close the curing chamber 11.

According to a preferred embodiment shown in the attached Figures, when the curing chamber 11 is closed (as shown in Figure 4), the two base walls 12 are arranged completely inside the lateral wall 13. In other words, the outer diameter of the two base walls 12 is substantially equal (in fact it is slightly smaller) than the inner diameter of the lateral wall 13.

Each base wall 12 comprises an annular seal gasket 16 arranged on the edge of the base wall 12 so that to be interposed between the base wall 12 and the lateral wall 13 when the curing chamber 11 is closed (as shown in Figure 4) to guarantee an enclosed pressurized curing chamber 11. The aim of the annular seal gaskets 16 is to guarantee the sealing of the curing chamber 11 when the curing chamber 11 is pressurized. According to a preferred embodiment shown in the attached Figures, each base wall 12 comprises an annular groove, which is arranged on the edge of the base wall 12 and houses the annular seal gasket 16.

According to a preferred embodiment, each annular seal gasket 16 is inflatable, i.e. can increase its dimension by being inflated and can decrease its dimension by being deflated. The curing system 10 comprises a pneumatic device 17 (schematically shown in Figure 4) configured to inflate the annular seal gaskets 16 after the curing chamber 11 has been closed (to increase the pneumatic seal before pressurizing the curing chamber 11) and to deflate the annular seal gaskets 16 before the curing process chamber 11 is opened (to reduce the friction against the lateral wall 13 and thus to allow the displacing of the lateral wall 13).

As better shown in Figure 3, the displacing device 15 comprises two parallel tracks 18 arranged axially (i.e. parallel to the central axis 14 of symmetry) above the lateral wall 13 and four sleds 19, each of which slides along a respective track 18. Furthermore, the displacing device 15 comprises two bars 20, each of which has a U-shape, is connected to the lateral wall 13 in two different points and is connected to two respective sleds 19; in other words, in each bar the two vertical "legs" of the U-shape ends at the lateral wall 13, while the horizontal central part of the U-shape is connected at the two opposite ends to the two sleds. According to different not-shown embodiment, the number and the conformation of the tracks 18, sleds 19 and bars 20 can be different.

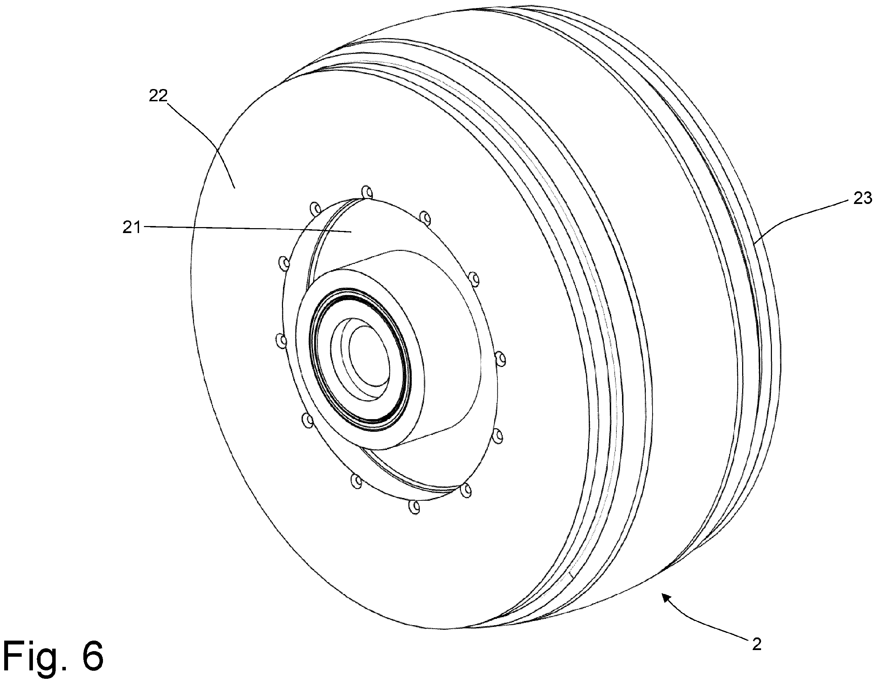

According to a preferred embodiment, the tire 2 is supported inside the curing chamber 11 by two clamps 21 (one of which is shown in Figure 6), which are arranged inside the curing chamber 11 and are movable with respect to each other to move towards and away from each other to clamp the tire 2 and to release the tire 2 respectively. In particular, the clamps 21 pushes against the annular bead areas of the tire 2. According to a preferred embodiment, the clamps 21 are fixed on in the inner side of the base wall 12 (i.e. each clamp is supported by a respective base wall 12); in this embodiment, one base wall 12 (i.e. one clamp 21) is directly fixed to a frame of the curing chamber 11 and never makes any axial movement with respect to the frame, while the other base wall 12 (i.e. the other clamp 21) is axially movable to move the respective clamp 21 towards and away from the other clamp 21. The clamps 21 together with the base walls 12 or only the clamps 21 could have a rotational movement to position the tire 2 correctly on the bead; in other words, the clamps 21 could have a rotational movement to correctly position the tire 2 by allowing a rotation of the tire 2 (in this way the tire 2 can find the right angular position).

It is important to point out that one base wall 12 is axially movable (using for example a pneumatic cylinder or a hydraulic cylinder) not to open and close the curing chamber 11, but only to move the respective clamp 21 towards and away from the other clamp 21.

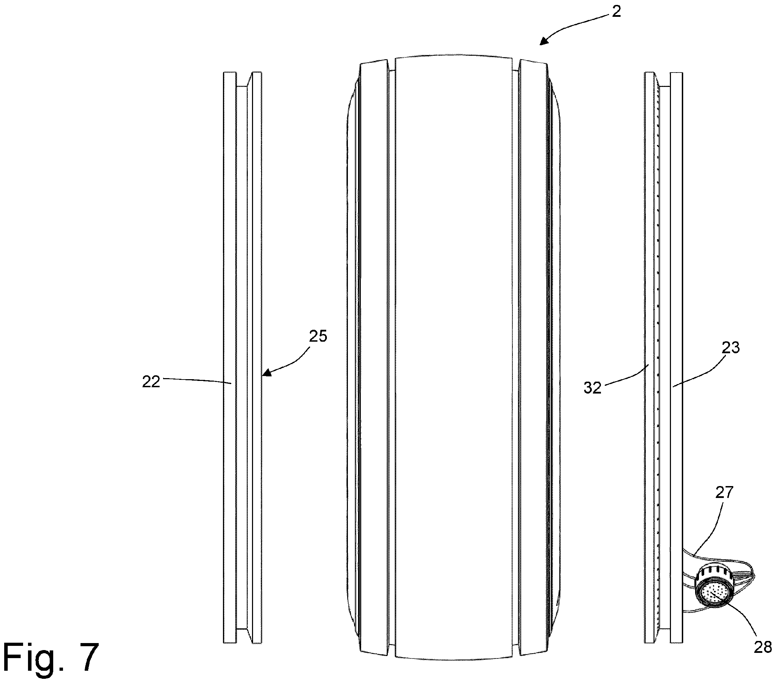

As shown in Figures 7, 8 and 9, the curing system 10 comprises two power supply bodies 22 and 23, which are arranged inside the curing chamber 11 on both sides of the tire 2; in other words, each power supply body 22 or 23 is arranged inside the curing chamber 11 and on the side of a respective base wall 12. Before the curing process, the power supply body 22 is placed on a first side of the cushion 8 and the power supply body 23 is placed on a second side of the cushion 8 opposite to the first side. The curing system 10 comprises an electric apparatus 24 (schematically shown in Figure 4) configured to apply, during the curing process, an electric potential difference between the two power supply bodies 22 and 23 to circulate the electric current through the cushion 8 (which is interposed between the two power supply bodies 22 and 23 and thus constitutes a "*conductive bridge*" between the two power supply bodies 22 and 23). As said above, the cushion 8 is at least partially electrically conductive and thus, when subjected to the electric potential difference applied by the two power supply bodies 22 and 23 allows the circulation through itself of an electric current (generating heat from the Joule effect).

According to a preferred embodiment, the power supply bodies 22 and 23 are also interchangeable for different dimensions of tires 2; i.e. the power supply bodies 22 and 23 can be taken apart to be substituted in case of changing of the dimensions of tires 2.

In particular, the two power supply bodies 22 and 23 are pushed towards each other with a predetermined thrust to clamp the cushion 8 between the two power supply bodies 22 and 23 mainly to create a seal (between the sidewall of the casing 5 and the pre-cured tread strip 9) from the pressurized area and also to reduce the electrical contact resistance between the power supply bodies 22 and 23 and the cushion 8. In other words, it is necessary to keep the pressurized area off from the pre-cured tread strip 9 and for this aim the power supply bodies 22 and 23 are pushed towards each other with a predetermined thrust to create a seal isolating the pressurized area. Furthermore, to reduce the electrical contact resistance between the power supply bodies 22 and 23 and the cushion 8 it is necessary to make the two power supply bodies 22 and 23 adhere well to the cushion 8 and thus it is necessary to push the two power supply bodies 22 and 23 towards each other clamping between them the cushion 8.

According to a preferred embodiment, each power supply body 22 or 23 has an annular rubber layer (called "*flexible sidewall matrix*") having the function of electrical insulator and also having the function of gasket to ensure the necessary pneumatic seal (like the envelope). In other words, the annular rubber layer of each power supply body 22 or 23 is designed to be a gasket ensuring the necessary pneumatic seal and offers also a good electric insulation (as being made of rubber).

According to a preferred embodiment shown in the attached Figures, the first power supply body 22 has a flat annular surface 25, which is made everywhere of an electrically conductive material and comes into contact with the first side of the cushion 8 (i.e. is configured to contact the cushion 8). In other words, the entire flat annular surface 25 has everywhere the same electrical potential and constitutes a single *"big"* electric pole. Preferably, the power supply body 22 is connected to a negative pole, i.e. to a ground pole, of the electric apparatus 24 applying the electric potential difference (as shown in Figure 4).

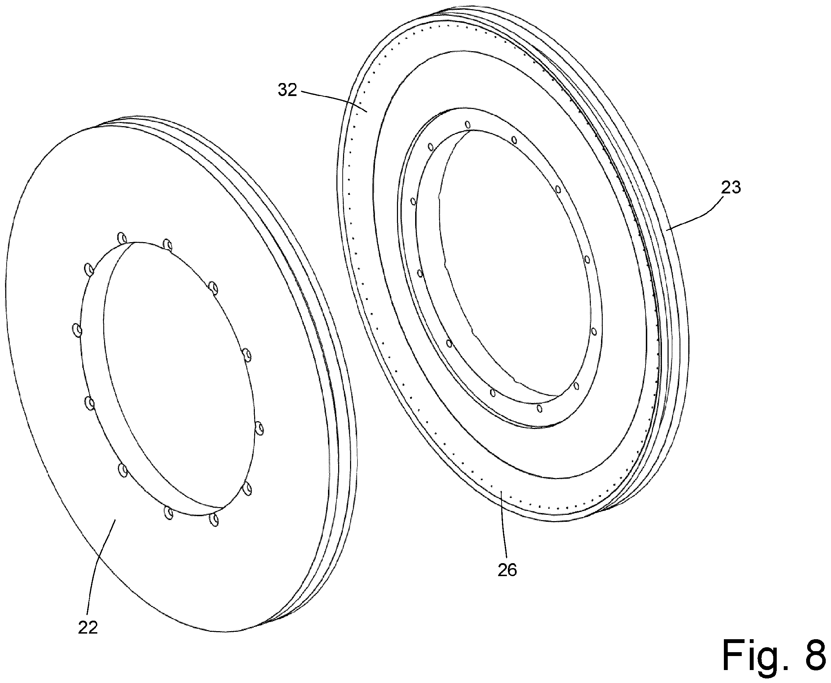

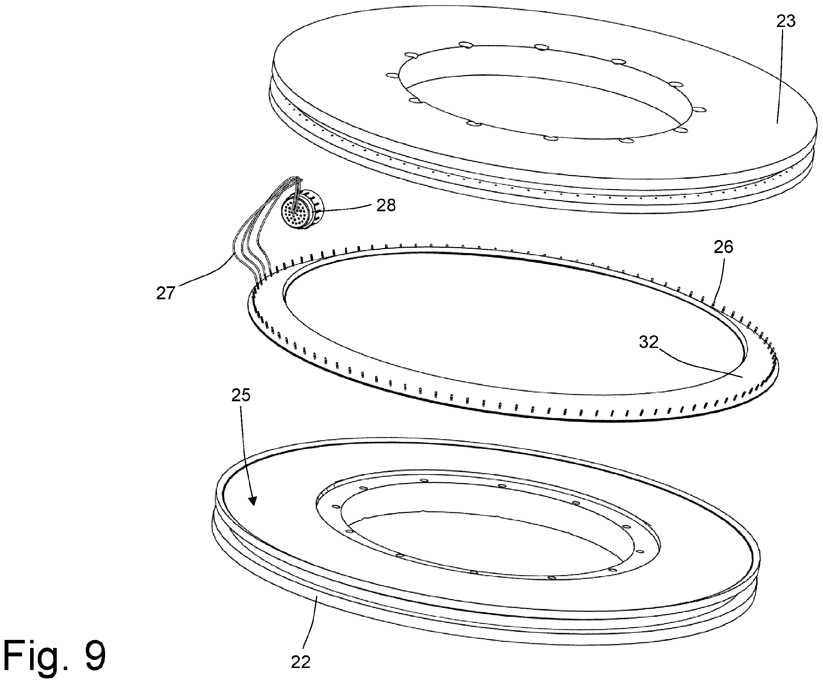

According to a preferred embodiment shown in Figures 8 and 9, the power supply body 23 comprises a plurality of pin-shaped contacts 26, each of which protrudes axially (perpendicularly) from the power supply body 23 and come into contact with the second side of the cushion 8 (i.e. the pin-shaped contacts 26 are configured to contact the cushion 8). According to a preferred embodiment the pin-shaped contacts 26 are uniformly arranged along a circumference. Preferably, each pin-shaped contact 26 is connected to a positive pole of the electric apparatus 24 applying the electric potential difference.

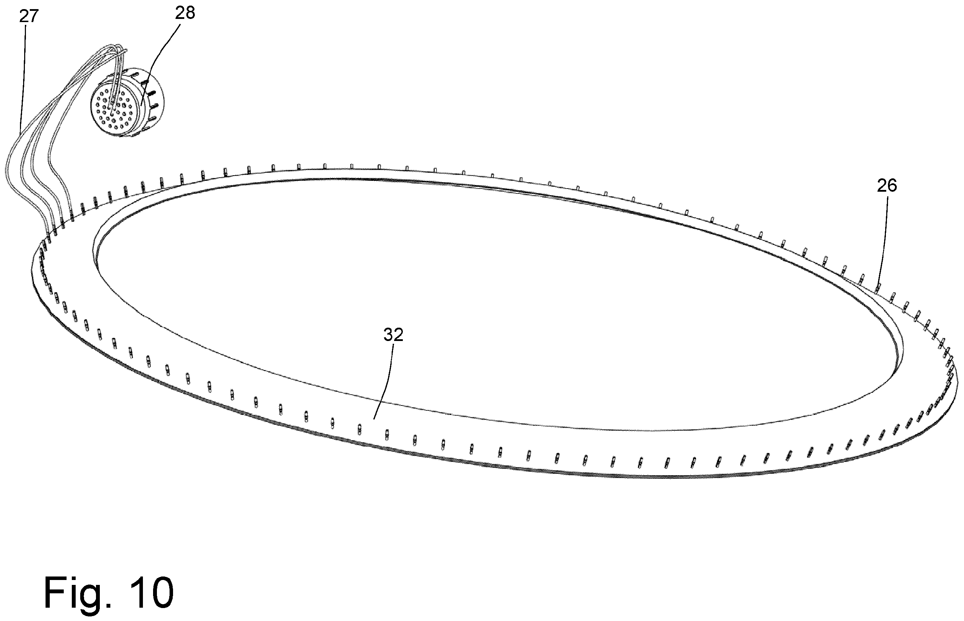

As shown in Figures 9 and 10, each pin-shaped contact 26 is connected to the electric apparatus 24 by means of a dedicated electric wire 27 (i.e. each electric wire 27 is connected to one and only one pin-shaped contact 26 and vice versa). Preferably, the electric wires 27 plug into a connector 28 that can be connected to the electric apparatus 24. In this way, the electric apparatus 24 can apply to each pin-shaped contact 26 an electric potential different from the electric potentials of all the other pin-shaped contacts 26 (i.e. each pin-shaped contact 26 can be controlled individually by the electric apparatus 24). It is important to point out that in Figures 9 and 10 only a very limited number of electric wires 27 is shown for clarity, but, in reality, the curing system 10 comprises a dedicated electric wire 27 for each pin-shaped contact 26.

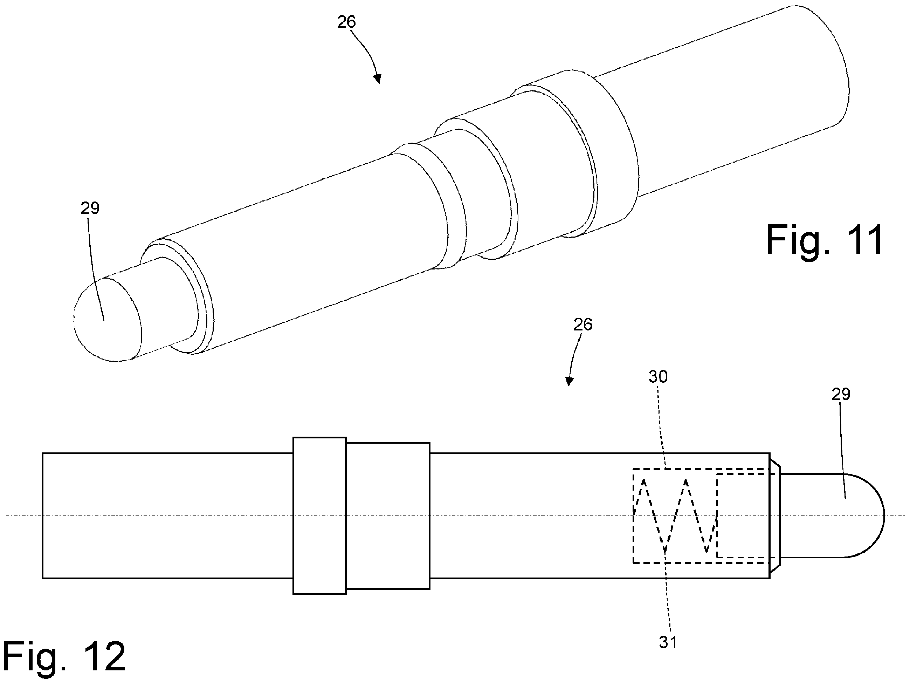

As shown in Figures 11 and 12, each pin-shaped contact 26 comprises a tip 29 (more or less sharpened), which comes into contact with the second side of the cushion 8 and is spring-loaded. In other words, in each pin-shaped contact 26 the tip 29 is mounted axially slidable inside a housing 30 and is pushed to the outside of the housing by a spring 31. In this manner, the thrust exerted by each pin-shaped contact 26 against the cushion 8 is substantially constant (depending only on the elastic force generated by the spring 31 which is constant in the first approximation) and therefore the thrust is always the same for all the pin-shaped contacts 26.

According to a preferred embodiment shown in Figures 9 and 10, the pin-shaped contacts 26 are supported by a supporting ring 32 made by an electrically insulating material; in this manner each pin-shaped contact 26 is electrically insulated from the other pin-shaped contacts 26.

According to a preferred embodiment, the electric apparatus 24 is configured to control the intensity of the current flowing through each pin-shaped contact 26 independently from the intensity of the current flowing through the other pin-shaped contacts 26; the intensity of the current flowing through each pin-shaped contact 26 is controlled by controlling the electric voltage applied to each pin-shaped contact 26 and thus also the electric voltage applied to each pin-shaped contact 26 is controlled independently from the electric voltage applied to the other pin-shaped contacts 26. Preferably, the electric apparatus 24 is configured to calculate (determine) the electric resistance seen by each pin-shaped contact 26 (i.e. the electric resistance existing between the pin-shaped contact 26 representing a positive electric pole and the power supply body 22 representing a negative electric pole) and to calculate (determine) a local temperature of the cushion 8 in correspondence of each pin-shaped contact 26 from the electric resistance seen by the pin-shaped contact 26 (in particular, the electric resistivity is determined from the electric resistance and then the temperature is determined from the electric resistivity as the law that binds resistivity and temperature is known). Furthermore, the electric apparatus 24 is configured to feed-back control the intensity of the current flowing through each pin-shaped contact 26 using the local temperature of the cushion 8 in correspondence of the pin-shaped contact 26 as the feed-back variable.

The tire manufacturing plant 1 described above is configured to retread used tires and thus the naked casings 5 are obtained by removing the old worn tread from used tires; according to a different embodiment, the tire manufacturing plant 1 is configured to produce new tires and thus the naked casings 5 are made by winding flat strips.

The tire manufacturing plant 1 described above has numerous advantages.

Firstly, the tire manufacturing plant 1 described above allow to apply a very uniform heating of the cushion 8; in other words, the heat is directly generated inside the cushion 8 by Joule effect (i.e. due to the circulation of an electric current through the cushion 8 acting as a resistor) and is equal along the entire cushion 8.

Thanks to the fact that the heat is generated directly and only where it is needed (i.e. in the cushion which is the only component that has to be cured and thus that to has to be heated), the tire manufacturing plant 1 described above allows minimizing the energy consumption.

The tire manufacturing plant 1 described above exhibits a high productivity (measured as the number of retreaded tires 2 per unit of time) insofar as the curing process is particularly short: about 25-35 minutes are sufficient in order to completely cure the cushion 8 (using in total a very low quantity of energy); this result is obtained because the heat is directly generated inside the cushion 8, while in traditional curing autoclave the heat inside the autoclave must first heat the pre-cured tread strip 9 (arranged more externally) and then the heat is transferred from the pre-cured tread strip 9 to the cushion 8.

Furthermore, the tire manufacturing plant 1 described above allows very uniform thrust to the entire pre-cured tread strip 9 by using a pneumatic system to apply the thrust.

The tire manufacturing plant 1 described above allows opening and closing the curing chamber 11 in a quick and simple way and when the curing chamber 11 is open the unloading of a cured tire 2 and the loading of a new tire 2 to be cured are very easy because, by removing the lateral wall 13, the access to the curing chamber 11 is wide.

Finally, the tire manufacturing plant 1 described above is compact and relatively inexpensive.

### LIST OF THE REFERENCE NUMBERS

- 1: retreading plant
- 2: tire
- 3: removal system
- 4: equatorial surface
- 5: casing
- 6: skiving system
- 7: winding system
- 8: cushion
- 9: pre-cured tread strip
- 10: curing system
- 11: curing chamber
- 12: base walls
- 13: lateral wall
- 14: central axis
- 15: displacing device
- 16: annular seal gasket
- 17: pneumatic device
- 18: tracks
- 19: sleds
- 20: bars
- 21: clamps
- 22: power supply body
- 23: power supply body
- 24: electric apparatus
- 25: surface
- 26: pin-shaped contacts
- 27: electric wire
- 28: connector
- 29: tip
- 30: housing
- 31: spring
- 32: supporting ring

## Claims

1. A tire manufacturing method comp rising the steps of:
providing a naked casing (5) presenting an equatorial surface (4) without any tread;
winding, in a winding system (7), a green rubber cushion (8) and a pre-cured tread strip (9) about the equatorial surface (4) of the casing (5); and
curing, in a curing system (10), the green rubber cushion (8) inserted within the tire (2) between the casing (5) and the tread strip (9);
wherein in the curing system (10) the tire (2) is inserted inside a sealed curing chamber (11) which is pressurized over the ambient pressure and is inflated;
the manufacturing method is **characterized in that:**
the curing chamber (11) is delimited by two opposite base walls (12) having a circular shape and by a lateral wall (13) having a cylindrical shape and connecting the two base walls (12) one to the other; and
the lateral wall (13) is moved axially, by means of a displacing device (15), to and from the two base walls (12) respectively to close and to open the curing chamber (11).

2. The tire manufacturing method according to claim 1, wherein, when the curing chamber (11) is closed, the two base walls (12) are arranged completely inside the lateral wall (13).

3. The tire manufacturing method according to claim 1 or 2, wherein each base wall (12) comprises an annular seal gasket (16), which is arranged on the edge of the base wall (12) so that to be interposed between the base wall (12) and the lateral wall (13) when the curing chamber (11) is closed to guarantee an enclosed pressurized curing chamber (11).

4. The tire manufacturing method according to claim 3, wherein each base wall (12) comprises an annular groove, which is arranged on the edge of the base wall (12) and houses the annular seal gasket (16).

5. The tire manufacturing method according to claim 3 or 4, wherein each annular seal gasket (16) is inflatable.

6. The tire manufacturing method according to claim 5 and comprising the further steps of inflating the annular seal gaskets (16) after the curing chamber (11) has been closed and deflating the annular seal gaskets (16) before the curing process chamber (11) is opened.

7. The tire manufacturing method according to one of the claims from 1 to 6, wherein the displacing device (15) comprises at least one track (18) arranged axially and at least one sled (19) which slides along the two tracks (18) and supports the lateral wall (13).

8. The tire manufacturing method according to claim 7 and wherein the displacing device (15) comprises:
two parallel tracks (18) arranged axially;
four sleds (19), each of which slides along a respective track (18); and
two bars (20), each of which has a U-shape, is connected to the lateral wall (13) in two different points and is connected to two respective sleds (19).

9. The tire manufacturing method according to one of the claims from 1 to 8, wherein only the lateral wall (13) is axially movable to open and close the curing chamber (11) while the two base walls (12) are not axially movable to open and close the curing chamber (11).

10. The tire manufacturing method according to one of the claims from 1 to 9, wherein the curing system (10) comprises two clamps (21), which are arranged inside the curing chamber (11) and are movable with respect to each other to move towards and away from each other to clamp the tire (2) and to release the tire (2) respectively.

11. The tire manufacturing method according to claim 10, wherein each clamp (21) is mounted on the inside of a respective base wall (12) and is interchangeable.

12. The tire manufacturing method according to claim 11, wherein one base wall (12) is fixed to a frame while the other base wall (12) is axially movable to move the respective clamp (21) towards and away from the other clamp (21) .

13. A tire manufacturing plant (1) comprising:
a working system configured to provide a naked casing (5) presenting an equatorial surface (4) without any tread;
a winding system (7) configured to wind a green rubber cushion (8) and a pre-cured tread strip (9) about the equatorial surface (4) of the casing (5); and
a curing system (10) configured to cure the green rubber cushion (8) inserted within the tire (2) between the casing (5) and the tread strip (9);
wherein the curing system (10) comprises a sealed curing chamber (11) which configured to house the tire (2) and to be pressurized over the ambient pressure;
the manufacturing plant (1) is **characterized in that:**
the curing chamber (11) is delimited by two opposite base walls (12) having a circular shape and by a lateral wall (13) having a cylindrical shape and connecting the two base walls (12) one to the other; and
it is provided a displacing device (15) configured to move axially the lateral wall (13) to and from the two base walls (12) respectively to close and to open the curing chamber (11).
